# DEMANDE DE BREVET EUROPEEN

(11) **EP 0 711 973 A2**
(43) Date de publication de la demande: **15.05.1996**
(21) Numéro de dépôt: 95402486.5
(22) Date de dépôt: 07.11.1995
(51) Int. Cl.: G01B 3/46, G01B 5/12

(54) **Tampon de mesure pneumatique**

(30) Priorité: 10.11.1994 FR 9413555
(71) Demandeur: SOCIETE INDUSTRIELLE DE LIAISONS ELECTRIQUES, F-75783 Paris Cédex 16 (FR)
(72) Inventeur: Decool, François, F-14400 Bayeux (FR)
(74) Mandataire: Fruchard, Guy

(57) **Abrégé**

Il comporte un support allongé (5) et au moins une bague de mesure (7) montée avec jeu radial sur le support allongé (5) et comprenant d'une part au moins une paire de buse de mesure (21) diamétralement opposées et alimentées en gaz sous pression, et d'autre part au moins trois buses de centrage (27) disposées sur la périphérie de la bague de mesure (7) suivant des rayons délimitant entre eux des angles égaux, ces buses de centrage étant alimentées en gaz sous pression indépendamment des buses de mesure (21).

## Description

La présente invention concerne un tampon de mesure pneumatique.

On connaît des dispositifs de mesure pneumatiques utilisant la mesure d'une pression pour déterminer la distance entre une buse de mesure du dispositif et une paroi en regard, cette distance étant elle-même représentative de la dimension d'une pièce à contrôler. Dans le cas le plus courant, un dispositif de mesure pneumatique comporte une chambre de mesure alimentée en gaz sous pression, une buse de mesure alimentée par la chambre de mesure et une prise de pression disposée dans la chambre de mesure en amont de la buse. La prise de pression est reliée à un manomètre qui mesure ainsi la pression dans la chambre de mesure, pression qui est fonction de la section de fuite entre la buse et la paroi de la pièce à contrôler et donc de la distance de cette paroi par rapport à la buse.

De façon plus spécifique, pour la mesure du diamètre d'un alésage d'une pièce à contrôler, on connaît des dispositifs de mesure pneumatique réalisés sous forme de tampons. Ces tampons de mesure pneumatiques comportent généralement un support allongé cylindrique comprenant une paire de buses de mesure diamétralement opposées et alimentées en gaz sous pression par l'intermédiaire d'une chambre de mesure équipée comme précédemment d'une prise de pression reliée à un manomètre. La pression mesurée par le manomètre est fonction des distances de la paroi de l'alésage par rapport à l'une et l'autre des buses. La distance entre les bords des buses étant connue, on peut en déduire la mesure du diamètre de l'alésage à contrôler.

Cependant, en pratique, il est très difficile de faire coïncider l'axe du support allongé et l'axe de l'alésage à contrôler, si bien que les deux buses de mesure sont situées à des distances différentes de la paroi de l'alésage. Or, la relation mathématique reliant la distance séparant la buse de mesure de la paroi et la pression dans la chambre de mesure n'est pas linéaire de sorte que la mesure du diamètre d'un alésage varie selon la position du tampon dans cet alésage, ce qui se traduit par une incertitude sur la dimension réelle de l'alésage. De plus, afin de permettre l'introduction du tampon à l'intérieur de l'alésage sans frotter la paroi de l'alésage même lorsque l'axe du tampon de mesure est décalé par rapport à l'axe de l'alésage il est nécessaire de prévoir un diamètre du tampon de mesure sensiblement plus faible que celui de l'alésage à mesurer, ce qui se traduit par une augmentation de la distance entre les buses de mesure et la paroi en regard. Or, on sait que la précision de la mesure diminue lorsque la distance entre la buse et la paroi augmente.

Afin de remédier à ce dernier inconvénient, il a été réalisé des tampons de mesure pneumatiques dans lesquels les buses de mesure sont portées par une bague de mesure montée avec un jeu radial sur le support allongé. Cette disposition permet un recentrage automatique de la bague dans l'alésage même lorsque le support allongé est décalé par rapport à l'axe de l'alésage et donc de réaliser des bagues ayant un diamètre très voisin de celui de l'alésage. Mais le déplacement radial de la bague lors de son introduction à l'intérieur de l'alésage ne peut être provoqué que par contact de cette bague avec l'alésage. On obtient finalement un excentrage maximum de la bague de mesure à l'intérieur de l'alésage, ce qui tend à fausser la mesure, comme cela a été expliqué précédemment.

L'objectif principal de l'invention est de concevoir un tampon de mesure pneumatique du type précité, permettant d'améliorer la mesure de l'alésage à contrôler.

En vue de la réalisation de ce but, on prévoit selon l'invention un tampon de mesure pneumatique comportant un support allongé et au moins une bague de mesure montée avec un jeu radial sur le support allongé et comprenant au moins une paire de buses de mesure diamétralement opposées et alimentées en gaz sous pression, dans lequel la bague de mesure comporte au moins trois buses de centrage disposées sur la périphérie de la bague de mesure suivant des rayons délimitant entre eux des angles sensiblement égaux, ces buses de centrage étant alimentées en gaz sous pression indépendamment des buses de mesure.

Ainsi, lors de l'introduction du tampon à l'intérieur d'un alésage à contrôler, le gaz éjecté par les buses de centrage forme entre la bague de mesure et l'alésage un coussin d'air qui assure un centrage automatique de la bague par rapport à l'alésage.

Selon une caractéristique avantageuse de l'invention, il comporte quatre buses de centrage pour chaque bague de mesure, les buses de centrage étant alimentées par paire, chaque paire étant alimentée par une chambre d'alimentation ayant une configuration symétrique par rapport à un plan de symétrie des buses de centrage. Ainsi, la pression d'alimentation en gaz de chaque buse de centrage est identique, ce qui permet d'obtenir un coussin d'air de pression uniforme pour un centrage optimum de la bague de mesure dans l'alésage.

Selon un mode de réalisation avantageux, le support allongé est un cylindre, en ce que la bague de mesure comporte une partie centrale cylindrique traversée par le support allongé cylindrique, et une partie annulaire ayant une face interne montée de façon étanche sur la périphérie de la partie centrale cylindrique, chaque chambre d'alimentation est délimitée par une rainure ménagée dans la périphérie de la partie centrale cylindrique d'une part, et par la face interne de la partie annulaire d'autre part.

Selon une autre caractéristique avantageuse de l'invention chaque buse de centrage comporte plusieurs orifices alignés suivant une direction axiale de la bague de mesure.

D'autres caractéristiques et avantages de l'invention apparaîtront à la lecture de la description qui suit d'un mode de réalisation particulier non limitatif en liaison avec les figures en annexe, parmi lesquelles :
- la figure 1 est une vue en élévation partiellement en coupe suivant un plan axial d'un tampon de mesure pneumatique selon l'invention ;
- la figure 2 est vue de détail en coupe, suivant la ligne II-II de la figure 3, de la bague de mesure du dispositif de la figure 1 ;
- la figure 3 est une vue suivant la ligne III-III de la figure 2 ;
- la figure 4 est une vue suivant la ligne IV-IV de la figure 2.

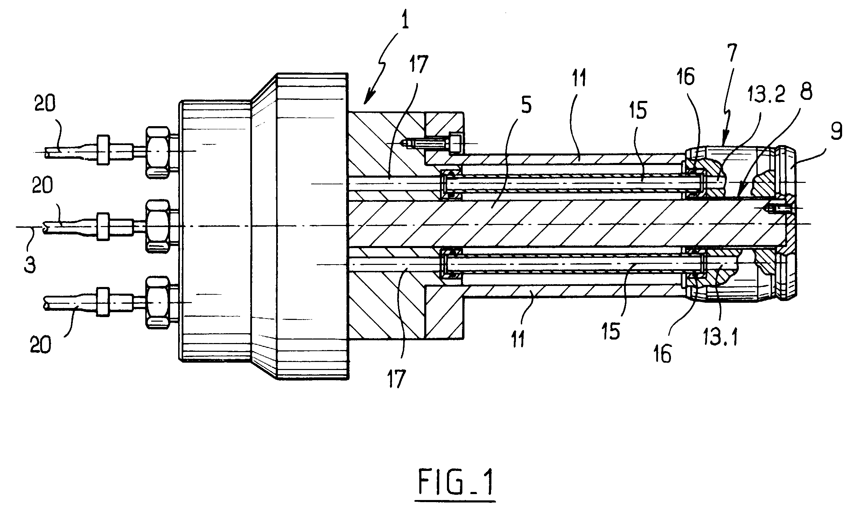

En référence à la figure 1, le tampon de mesure pneumatique comporte un corps principal 1 sur lequel est fixé un support allongé cylindrique 5 ayant un axe de révolution 3. Une bague de mesure 7 est montée sur la portion d'extrémité du support cylindrique 5. Le diamètre intérieur de la bague de mesure 7 est légèrement plus grand que le diamètre extérieur du support 5, de sorte qu'il existe un jeu radial entre la bague et le support. La bague 7 est en outre maintenue axialement entre une plaque 9 fixée à l'extrémité du support 5 perpendiculairement à l'axe 3 et une entretoise tubulaire 11 rigidement fixée au corps principal 1 et s'étendant depuis celui-ci en porte-à-faux jusqu'à la bague 7.

La bague de mesure 7 comporte trois canaux 13.1, 13.2 et 13.3 parmi lesquels seuls les deux premiers sont visibles à la figure 1. Chacun des canaux 13.1, 13.2 et 13.3 est raccordé de façon étanche à un tube 15 qui s'étend parallèlement à l'axe 3 jusqu'au corps principal 1 dans lequel sont ménagés trois conduits 17 qui sont raccordés individuellement et de façon étanche aux trois tuyaux 15 et s'étendent dans le prolongement de celui-ci. Les conduits 17 sont reliées à des tuyaux 20 associés à des sources de gaz sous pression (non représentées).

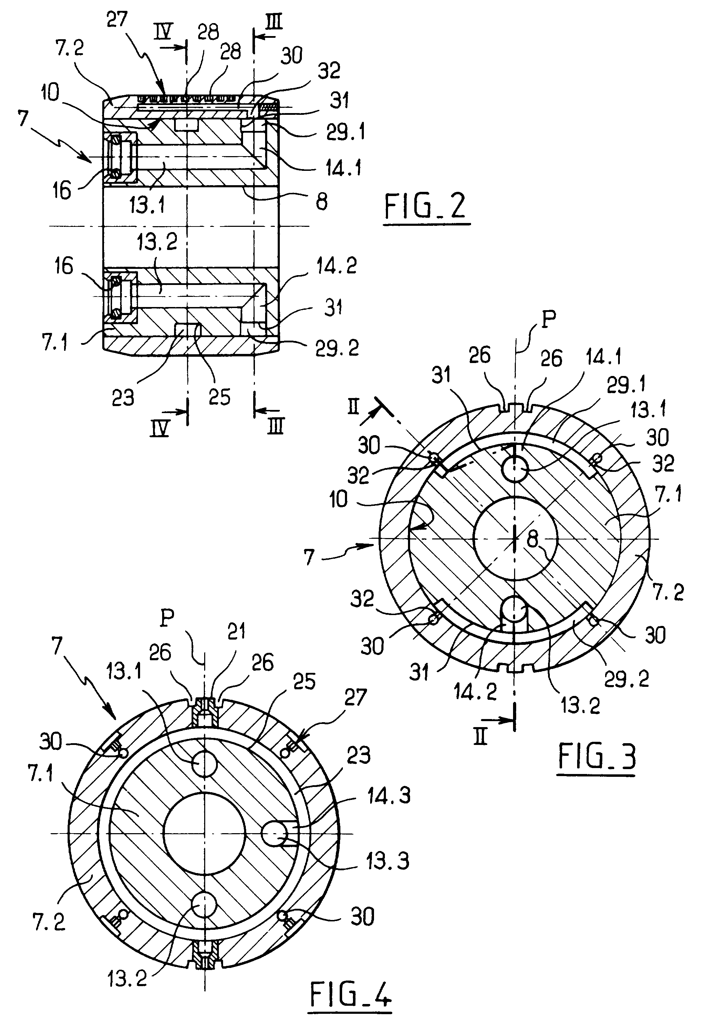

Aux figures 2 à 4, on a représenté plus en détail la bague de mesure 7. Cette bague comporte une partie centrale cylindrique 7.1, dans laquelle est ménagé un alésage axial 8. Le diamètre de l'alésage est légèrement supérieur au diamètre extérieur du support cylindrique 5 afin de permettre un débattement de la bague 7 par rapport au support cylindrique 5. Afin que ce débattement ne soit pas contrarié par la raideur des tubes 15, des joints toriques élastiques 16 sont prévus entre les extrémités des tubes 15 et les extrémités correspondantes des canaux 13. Une partie annulaire 7.2 coaxiale à la partie centrale 7.1 comporte une face interne 10 montée de façon étanche sur la face externe de la partie centrale cylindrique 7.1. Comme illustré par la figure 4, cette partie annulaire est équipée de deux buses de mesure 21 diamétralement opposées et traversant radialement la partie annulaire 7.2. Ces buses 21 sont alimentées par une chambre annulaire 23 délimitée par une rainure circonférentielle 25 ménagée dans la périphérie de la partie centrale 7.1 d'une part, et par la face interne 10 de la partie annulaire 7.2 d'autre part. La chambre annulaire 23 est reliée au canal 13.3 par un perçage radial 14.3 (Figure 4).

En outre, deux rainures 26 sont ménagées extérieurement dans la partie annulaire 7.2 de part et d'autre de chacune des buses de mesure 21, parallèlement à l'axe longitudinal de la bague.

Par ailleurs, la partie annulaire 7.2 est équipée de quatre buses de centrage 27 disposées sur la périphérie de cette partie annulaire, suivant des rayons délimitant entre eux des angles égaux de 90°, et symétriquement par rapport à un plan diamétral P passant parles canaux 13.1 et 13.2. Chaque buse de centrage 27 est constituée d'une série d'orifices 28 alignés suivant une direction parallèle à l'axe de la bague et débouchant d'une part à l'extérieure de la partie annulaire 7.2 et d'autre part dans un conduit 30 s'étendant selon une direction axiale de la bague 7.

Comme cela est mieux visible à la figure 3, les conduits 30 des buses de centrage 27 sont reliées par paires à des chambres 29.1 et 29.2 par des perçages radiaux 32. Chaque chambre est délimitée par une rainure 31 ménagée dans la partie centrale cylindrique 7.1 sur une portion angulaire de sa périphérie, et la face interne 10 de la partie annulaire 7.2. La chambre 29.1 communique avec le canal 13.1 par un perçage radial 14.1 et la chambre 29.2 communique avec le canal 13.2 par un perçage radial 14.2. Les différents perçages radiaux sont disposés de façon symétrique par rapport au plan P afin que les pertes de charge soient les mêmes lors de l'alimentation des buses de centrage.

En service, on raccorde les deux tuyaux 20 qui sont associés aux canaux 13.1 et 13.2 à une source d'alimentation en gaz sous pression et on raccorde le tuyaux 20 qui est associé au canal 13.3 à une chambre de mesure (non représentée) comprenant une prise de pression reliée à un manomètre et alimentée par une source de gaz sous pression stable.

Lorsque la bague de mesure 7 est introduite à l'intérieure d'un alésage d'une pièce à contrôler (non représentée), le gaz qui s'échappe sous pression à l'extérieure des buses de centrage 27 forme un coussin d'air entre la face externe de la partie annulaire 7.2 de la bague de mesure 7 et la paroi de l'alésage. Comme la distribution du gaz sous pression aux quatre buses de centrage 27 est répartie de façon symétrique, la pression du coussin d'air est uniforme. Celui-ci assure donc un centrage très précis de la bague de mesure 7 dans l'alésage. Ainsi, les buses de mesure 21, desquelles s'échappe le gaz sous pression issu de la chambre de mesure, sont situées à égale distance de la paroi de l'alésage. La pression mesurée par le manomètre dans la chambre de mesure correspond donc de façon exacte au diamètre de l'alésage et la même mesure est obtenue chaque fois que le tampon est introduit dans le même alésage. La précision de la mesure est donc fortement améliorée par rapport aux dispositifs antérieurs. En outre, le centrage automatique de la bague dans l'alésage sans contact avec la paroi de celui-ci permet de prévoir une bague de mesure ayant un diamètre externe très proche de celui de l'alésage à mesurer, ce qui améliore encore la mesure par réduction de la distance entre chaque buse de mesure et la paroi en regard.

L'invention n'est pas limitée au mode de réalisation qui vient d'être décrit mais englobe au contraire tout le dispositif reprenant, avec des moyens équivalents, les caractéristiques essentielles définies dans les revendications. Par exemple, bien qu'un tampon de mesure pneumatique comportant une seule bague de mesure ait été décrit, il est bien entendu possible de réaliser un tampon de mesure pneumatique analogue, comportant plusieurs bagues de mesure réparties le long du support allongé et comprenant chacune une paire de buses de mesure alimentées en gaz sous pression par l'intermédiaire d'une chambre de mesure propre à la bague considérée. De même, bien que dans l'exemple précédemment décrit, la bague de mesure comporte une seule paire de buses de mesure, on pourra équiper le tampon de mesure de bagues comportant chacune plusieurs paires de buses de mesure angulairement décalées et alimentées en gaz sous pression par l'intermédiaire de conduits associés à des chambres de mesure indépendantes, afin de mesurer différents diamètres de l'alésage dans un même plan transversal et s'assurer ainsi que l'alésage a bien une section circulaire.

Bien que le tampon de mesure selon l'invention ait été décrit avec quatre buses de centrage on peut prévoir seulement trois buses de centrage. Il faudra dans ce cas prévoir une alimentation adaptée en conséquence afin que la face de sustentation des coussins d'air réalisés par les trois buses soit équilibrée pour assurer un centrage effectif.

## Revendications

1. Tampon de mesure pneumatique comportant un support allongé (5) et au moins une bague de mesure (7) montée avec un jeu radial sur le support allongé (5) et comprenant au moins une paire de buses de mesure (21) diamétralement opposées et alimentées en gaz sous pression, et au moins trois organes de centrage (27) disposés sur la périphérie de la bague de mesure (7) suivant des rayons délimitant entre eux des angles sensiblement égaux, caractérisé en ce que les organes de centrage sont des buses (27) alimentées en gaz sous pression indépendamment des buses de mesure (21).

2. Tampon de mesure pneumatique selon la revendication 1, caractérisé en ce qu'il comporte quatre buses de centrage (27) pour chaque bague de mesure (7), les buses de centrage (27) étant alimentées par paire, chaque paire étant alimentée par une chambre d'alimentation (29) ayant une configuration symétrique par rapport à un plan de symétrie (P) des buses de centrage (27).

3. Tampon de mesure pneumatique selon la revendication 2, caractérisé en ce que le support allongé (5) est un cylindre, en ce que la bague de mesure (7) comporte une partie centrale cylindrique (7.1) traversée par le support allongé cylindrique (5), et une partie annulaire (7.2) ayant une face interne montée de façon étanche sur la périphérie de la partie centrale cylindrique (7.1), et en ce que chaque chambre d'alimentation est délimitée par une rainure (31) ménagée dans la périphérie de la partie centrale cylindrique (7.1) d'une part, et par la face interne de la partie annulaire (7.2) d'autre part.

4. Tampon de mesure pneumatique selon l'une des revendications précédentes, caractérisé en ce que chaque buse de centrage (27) comporte plusieurs orifices (28) alignés suivant une direction axiale de la bague de mesure (7).
